# EUROPEAN PATENT APPLICATION

(11) **EP 2 808 833 A1**
(43) Date of publication of application: **03.12.2014**
(21) Application number: 13169914.2
(22) Date of filing: 30.05.2013
(51) Int. Cl.: G06Q 10/06, G06Q 10/10, G06F 17/30, G06F 3/048

(54) **A method for restricting specific users from accessing predetermined portions of MES screens depending on the state of the web screen page**

(71) Applicant: Siemens Aktiengesellschaft, 80333 München (DE)
(72) Inventor: Colletti, Paola, 16132 Genova (IT); Noferi, Stefano, 16149 Genova (IT)
(74) Representative: Maier, Daniel Oliver

(57) **Abstract**

The present invention allows a generic set-up of the MES screen wherein the panel always comprises the data available but blocks this data from view until the data segregation service removes this blocking according to the user roles and the state of the actual MES screen page.

Substantially, the solutions according to the present invention rely on the three afore-mentioned elements:
a) the data segregation service that controls which data of the manufacturing execution system can be accessed by the logged user;
b) the panel used in the MES screens, said panel comprising all the data that can be hidden; and
c) the contextualization service that allows to store all the data that is currently selected on the MES Screen.

Further, the overall feature of the present invention is based on the concept that the data access management is applied at GUI level of each specific MES screen. The main advantage of the present invention is therefore that a set of predetermined generic MES screens can be delivered. The access to specific portions of the MES screens is regulated according to the actions and their restriction rules that involve logic on the data managed by the MES screen in certain states of the MES screen without the need to modify the source code of the MES screens. This leads to minor efforts for the customizing the MES screen leading to a cost reduction during the engineering phase. Further, the present invention has a less error prone approach for the customization of MES screen and the source code is not modified resulting in less maintenance costs wherein the copyrights on the MES screens are preserved.

## Description

The present invention relates to a system and a method for restricting specific users from accessing predetermined portions of MES screens depending on the state of the web screen page.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

The Siemens Corp. offers a broad range of MES products, under its SIMATIC® IT product family.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred to as ISA-95 or S95.

The functions that a MES system usually includes are resource allocation and status, dispatching production orders, data collection/acquisition, quality management, maintenance management, performance analysis, operations/detail scheduling, document control, labor management, process management and product tracking.

Thus, the goal of MES systems developed by software suppliers is to provide manufacturing companies (the customers) with tools for measuring and controlling production activities with the aim of boosting profitability, increasing productivity, improving quality and process performance to manufacturing plants.

As used herein, a software application is a set of software components developed by software developers to perform some useful actions within a MES system, e.g. monitoring values coming from plant process or controlling a plant device.

Typically, at engineering or configuration time, system engineers flexibly customize MES applications according to the specific manufacturing plant requirements.

Instead, at runtime, MES applications are utilized by end-users who may be plant operators or line responsible personnel.

MES systems are provided with front-end/client GUI applications which may be used by end-users to plan and control manufacturing activities.

MES GUI applications play a key role in bringing together process, quality and business information from various sources into one unified real-time view of the production status of the plant. In fact, MES GUI applications display to the end-user graphical screens (MES screens) which enable overview several parameters or scenarios of the plant activities.

Nowadays, MES screens are mostly developed in form of web-pages.

For example, with MES application suite SIMATIC IT, a Client Application Builder (CAB) is provided which is composed of a set of modules allowing users to build customized GUI screen-pages. SIMATIC® IT CAB is a development platform based on .Net technology. For the development of the project Microsoft Visual Studio.Net has to be used. CAB already provides some predefined libraries and tools for the communication with all the SIMATIC IT components. CAB provides MES Graphic User Interface. Therefore, it participates in every action of the Execution of the production schedule. CAB is composed of a set of modules, which allow the user to build GUIs (fully integrated with SIMATIC IT Production Suite) in a Web application and display the Web pages in a Web Browser. It collects data from heterogeneous sources, manipulates and aggregates these data before visualization. SIMATIC IT data are natively integrated, while the standard environment enables integration with virtually every source. CAB offers full Zero Administration Cost (ZAC) capabilities as graphic controls and/or additional files are automatically downloaded and installed by Internet Explorer, therefore every PC on the intranet with Internet Explorer on board can be a SIMATIC IT CAB client. In this case, the CAB environment (CAB Server, CAB Webserver) is placed on a special CAB machine. By calling the Internet Explorer of the OS machine, there will be a connection to the CAB machine to start the web project inside the OS environment.

Typically, software suppliers develop a MES software-product as a general purpose solution to meet several and different customer requirements. As a consequence to it, also the collections of MES screens, which are supplied with the MES product, are designed to be general purpose in order to be used in various different situations.

However, since customers require that MES products be customized for a specific project fitting their specific needs, also the GUIs of MES screens need to be customized in order to satisfy the customer requirements of the specific project. This customer need is a fundamental one since the end-users, at the customer site, interact with the MES product mainly through the GUI of the MES-screens.

Hence, some enhancement needs of MES customers have to be fulfilled on the specific single project, so that the effectiveness and the usability of the MES solution are improved.

A first enhancement need of MES customers regards the way data are inputted.

For example, some MES customers prefer to input a particular data through a simple textbox and some other customers prefer to input the same data through a combo box that is already pre-filled with a set of values. Or in another simplified example, some customers wish to be notified that the data input in a field is wrong through an asterisk, other customers wish that the notification of an error occurs via a change of the background color of the input field. In more advanced scenarios, MES end-user require that the gathering of the input data is done through external sources that need custom interface, such as custom browsers or charts.

A second enhancement need of MES customers regards the customization of the master-detail view. In fact, MES screens are very often designed with a master-detail view: i.e. a grid or tree represents the main entity of the screen page and through the selection of a specific item; its details are shown.

Unfortunately, the details that each customer wants to see are often different and specific for a specific factory requirement. These details are usually related to a "master" entity in the page. Typically, the detail information can be viewed through a panel control or alternatively can be logically grouped through a tab control in different tab-panels.

There are three typical technical requirements that need to be met in MES screens designed with the master/details view.

A first typical technical requirement is to hide some details that were defined in the general purpose screen of the MES product.

A second technical requirement is to add some additional details that were not defined in the general purpose screen of the product.

A third technical requirement is to contextualize the added details so that they are aware of the original page and they behave accordingly.

Finally, the added controls cannot work correctly without being aware of the original. Hence, it is seen that, since different MES customers have different requirements, different types of customizations are needed.

In the art, the customization problem of MES screen has been solved in two ways.

According to a first way, the source codes of the screens are delivered to the system engineers or to the system integrators that modify them according to the required customizations. This action has relevant cost impacts in terms of required time and efforts. In addition, another drawback is that the proprietary source code is exposed to third parties that regularly are not employees of the software developing company with an evident intellectual property problem.

According to a second way, the screens are developed from scratch by the software developers in order to meet the customer needs. A brand new web-page, in replace of the original one, is to be created containing the required customizations. Unfortunately, this second way has the drawback that it is not possible to develop general-purpose screens but only project-specific ones. The customization is customer-specific: a new modified version of the page is created. This action has a very high effort: effort of time for the analysis of the original page (the person who customize the screen is not usually the same who created it); effort of time to modify the page; effort of time to test the page (also some solid regression test is needed); effort to maintain a different version of the same page for different customers.

Unfortunately, in both known ways of customizing MES web-screens, the source code of the web-page has to be modified. This fact implies that the source code of the product-delivered screens needs to be completely tested again, with the relevant cost impacts in terms of time and efforts, also taking into account requirements on code maintenance and upgrades.

Moreover, with known methods of customizing MES web-screens, not only the development and customization efforts are increased but also the reusability of the delivered web-screens is reduced.

For example, in known methods of customizing web-screens in order to obtain one of the two above mentioned enhancements, i.e. the customization of the way of inputting data or of the master-detail view, an ASP.NET control (user or custom) is used, hosted on the web-page. However, unfortunately this customization is accomplished by adding and coding an ASP.NET control within the page by having access to the source code of the page with the above described drawbacks.

### TECHNICAL PROBLEM

Very often in a MES environment, the access to MES data and to MES functionalities needs to be restricted only to certain authorized users.

Sometimes, it is even required to hide some portions of a MES screens to some specific users.

Such requirements prove to be extremely important for MES projects in regulated industries, such as food and beverages, pharmaceutical industry. In addition, there are some scenarios where it may be required that a portion of the MES screen be visible only if the MES screen displays an item with a particular attribute and the operator selects this particular portion.

Such a scenario can be illustrated by means of the simple example below. It is assumed that a MES screen is showing some MES items, e.g. Production Orders, on a grid or on a table. By selecting a given Production Order on the table, some information details of the order are displayed in a MES screen portion. It is further assumed that in a specific project the customer wishes that certain users having a certain role in terms of area of responsability and/or management level are allowed to view all the Production Orders on that table, but at the same time these user are allowed to see only the details of Production Orders produced on a certain Production Line (i.e. the attribute of the item).

The technical problem is that:
Unfortunately, since MES web screens are supplied as a general product, it is not possible to define "a priori" - i.e. when the MES screen is developed by R&D department at engineering level - the extent of data which are the diverse users enabled to view at a given portion of the MES screen.

Hence, it is desirable to be enabled for the tailoring of the generic product MES screens to a specific customer project in accordance with the different roles of the users and with the data present on the specific customer plant. Further, it would be also desirable that any restriction and implications on the data to be displayed related to regulatory and/or administrative reasons can be customized accordingly.

In state of the art techniques, custom solutions can be developed on a project by project basis where access control policies are hardcoded in the MES screens for each individual and specific customer project.

Clearly, this approach has the some drawbacks. Unfortunately, this approach is time consuming prone to errors. In fact, access control policies are often coded in MES screens each time in a different manner. Usually, access control policies are extremely distributed inside the MES screens. This implies that there does not exist any centralized environment where the users can manage all the configurations. The system integrator in charge to implement a specific project is therefore required to have and/or to modify the source codes of the involved MES screens with the accompanying drawbacks, such as the difficulties in the customizations, the problems of maintenance, the lack of protecting the IP rights of the page etc.

Therefore, it is the objective of the present invention to provide a method and a system for restricting specific user roles from accessing predetermined portions of the MES screen that comprise a centralized environment to manage the user and the role assigned to the user with respect to the access rights the specific user has to view specific content of the MES screens.

This objective is achieved according to the present invention by a method for restricting specific user roles from accessing predetermined portions of MES screens depending on the state of the MES screen page in a manufacturing execution system, comprising the steps of:
a) at engineering phase:
   a1) defining a number of logical entities, such as a production order, a machine, a production line, personnel, materials, by an attribute, present within a production plant controlled and monitored by the MES;
   a2) associating with each logical entity a number of actions being executable on and/or with respect to the respective logical entity;
   a3) associating to an action a restriction rule that defines a number of rules for restricting the action relative the value/s of one or more attributes;
   a4) associating the actions and the respective restriction rules to a number of roles in terms of role specific access rights thereby establishing a data segregation service;
   a5) writing the role specific access rights into a MES screen configuration file stored at a MES database;
   a6) defining a panel in the MES screen that comprises data that is subject to role specific access rights;
b) at runtime phase:
   b1) when the MES screen is requested for the first time or when a specific user interacts with the MES screen, reading by the panel from the configuration file the logical entity and the action related to the request of the specific user;
   b2) retrieving the information on the state of the MES screen page from a contextualization service that comprises the current values for the attribute of the respective logical entity wherein the current value of the attribute of the logical entity is written on the contextualization service by a logic programmed on the MES Screen;
   b3) invoking by the panel the data segregation service asking the right to load the content of the panel to the MES screen;
   b4) checking by the data segregation service the information supplied by the panel, such as the specific user, the logical entity, the action and the current value of the attribute against the roles and the role specific access rights stored to the MES database at the engineering phase, and only if the specific user is assigned a role that is allowed to perform the action, responding to the panel that the permission is granted and showing the content of the panel.

This objective is further achieved by a system for restricting specific user roles from accessing predetermined portions of MES screens depending on the state of the MES screen page in a manufacturing execution system, comprising:
a) at engineering phase:
   a1) a number of logical entities, such as a production order, a machine, a production line, personnel, materials, present within a production plant controlled and monitored by the MES, said logical entities being defined by an attribute;
   a2) each logical entity being associated to a number of actions being executable on and/or with respect to the respective logical entity;
   a3) means for associating to an action a restriction rule that defines a number of rules for restricting the action relative the value/s of one or more attributes;
   a4) a data segregation service handling the actions and the respective restriction rules being associated to a number of roles in terms of role specific access rights;
   a5) a MES database for writing the role specific access rights into a MES screen configuration file;
   a6) a panel in the MES screen comprising data that is subject to role specific access rights;
b) at runtime phase:
   b1) when the MES screen is requested for the first time or when a specific user interacts with the MES screen, the panel reads from the configuration file the logical entity and the action related to the request of the specific user;
   b2) a contextualization service for retrieving the information on the state of the MES screen page, said contextualization service comprises the current values for the attribute of the respective logical entity wherein the current value of the attribute of the logical entity is written on the contextualization service by a logic programmed on the MES Screen;
   b3) the panel invokes the data segregation service asking the right to load the content of the panel to the MES screen;
   b4) the data segregation service checks the information supplied by the panel, such as the specific user, the logical entity, the action and the current value of the attribute, against the roles and the role specific access rights stored to the MES database at the engineering phase, and only if the specific user is assigned a role that is allowed to perform the action, the data segregation service responds to the panel that the permission is granted and the panel shows its content.

These measures therefore allow a generic set-up of the MES screen wherein the panel always comprises the data available but blocks this data from view until the data segregation service removes this blocking according to the user roles and the state of the actual MES screen page.

Substantially, the solutions according to the present invention rely on the three afore-mentioned elements:
a) the data segregation service that controls which data of the manufacturing execution system can be accessed by the logged user;
b) the panel used in the MES screens, said panel comprising all the data that can be hidden; and
c) the contextualization service that allows to store all the data that is currently selected on the MES Screen.

Further, the overall feature of the present invention is based on the concept that the data access management is applied at GUI level of each specific MES screen. The main advantage of the present invention is therefore that a set of predetermined generic MES screens can be delivered. The access to specific portions of the MES screens is regulated according to the actions and their restriction rules that involve logic on the data managed by the MES screen in certain states of the MES screen without the need to modify the source code of the MES screens. This leads to minor efforts for the customizing the MES screen leading to a cost reduction during the engineering phase. Further, the present invention has a less error prone approach for the customization of MES screen and the source code is not modified resulting in less maintenance costs wherein the copyrights on the MES screens are preserved.

Preferred embodiments of the present invention are hereinafter described in more detail with respect to the attached drawings which depict in:
- Figure 1: is a flowchart schematically illustrating the concept of the data access management during the engineering phase; and
- Figure 2: is a flowchart schematically illustrating the concept of the data access management during the runtime phase.

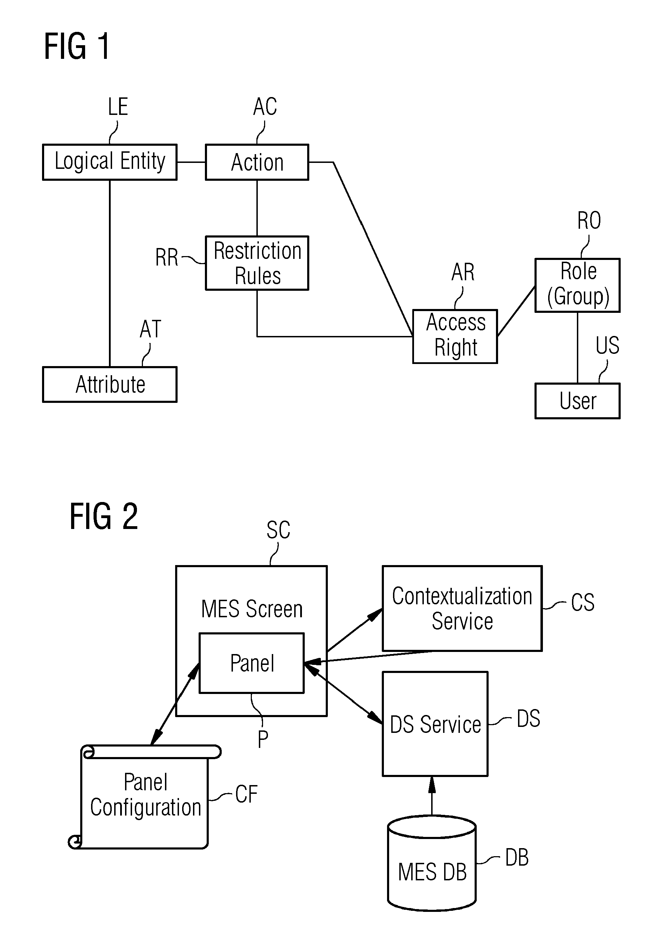

MES screens SC (see Figure 2) form the essential GUI part of the here not shown client application builder tool (CAB). A quiet sophisticated but intuitivly usable client application builder is provided with the SIMATIC IT software from Siemens Aktiengesellschaft. The functionality of the client application builder has been recently described in chapter 17 of the broschure "SIMATIC IT 6.5 SP3 - Getting Started - Edition 06/2012 - A5E03885313-01" published by Siemens Aktiengesellschaft which is herewith incorporated by reference.

In order to customize the general MES screens at engineering phase, a system engineer configures on a MES database DB (see Fig. 2) the following three entities as this is shown in Figure 1:
a) Logical Entity LE;
b) Action AC related to a logical entity LE; and
c) Restriction Rule RR related to the action AC (optionally).

### 1. FIRST ENTITY: Logical Entity LE

The Logical Entity LE is a MES relevant entity defined with its attributes AT (or parameters). For example, a Logical Entity LE can be a Production Order defined by a single attribute AT (for sake of simplicity) for example being a production line, i.e. the production line where the production order is produced. Other logical entities LE can be any kind of resource, such as materials, machines, personnel, product segments, product production segments and the like.

### 2. SECOND ENTITY: Action AC

Associated to an individual Logical Entity LE, there exist some actions AC that can be specifically done on the logical entity LE. In our simple example of the production order, the action "SHOW DETAILS" can be associated. Other actions are "DELIVER KPI", "RENEW", "SHOW NEXT ITEM" and the like.

### 3. THIRD ENTITY (Optional): Restriction Rule RR

Optionally, associated to an Action AC, the Restriction Rule entity RR defines some rules for restricting the Action AC in accordance with the value/s of one or more attributes AT. In our simple example, one can have the Restriction Rule equal to "Production Line = Line1". Further, at engineering phase, the Action AC and the respective Restriction Rules RR must be associated with the various Roles RO (Groups of Users US) of the respective production facility (Plant). This is achievable since the Actions AC and the Restriction Rules RR are associated to Access Rights AC that can be assigned to the various Roles RO defined on the MES System for that plant.

After this engineering phase, a configuration file CF has in the present simple example the following design:

| Logical Entity | Action | Attribute list (structure) | Rule | Group | AR |
|---|---|---|---|---|---|
| Production Order | ----- | LineId: string | | | |
| Production Order | Show Details | n.a. | ProductionLine = ["Line1"] | Group1 | AR1 |
| Production Order | Show Details | n.a. | none | Group2 | AR2 |

Finally, during the engineering phase, the system engineer associates to a Panel P within the MES screen SC the Logical Entity LE and the Action AC that must be checked for the afore-created restriction rule RR. This information is written in the configuration file CF, too. In the present example, the Logical Entity LE = "Production Order" and the Action AC = "Show Details" are associated to the panel P of the MES screen SC.

### At Run Time

At runtime (i.e when the specific page is to be displayed on the MES screen SC, the invented mechanism works as follows: When the MES screen SC is requested for the first time or when the user US interacts with the MES screen SC, the Panel P reads from its configuration file CF (Panel Configuration) the information which is stored on the MES database DB related to the Logical Entity(ies) LE and the respective Action(s) AC that are subject to a access right AR.

This information (in our example the logical entity LE "Production Order" and the action AC "View Details") will be used in order to inquire a data segregation service DS if the current user is granted to see the content of the panel P. After retrieving the information on the state of the page of the MES screen (for example which row has been selected on a table etc..) from a contextualization service SC that comprises the current values of the attribute AT related to the Logical Entity in question (in our example the attribute "Production Line" being related to the logical entity "Production Order"). The current value of the attribute(s) AT is written on the contextualization service by a logic programmed for and on the MES Screen SC. Therefore, the panel P within the MES screen SC comprises all the data which are basically configured to be displayed thereon. Actually, the portions of data eventually displayed are determined according to the following inquiries. The Panel P invokes the data segregation service DS asking the right to display the content of the panel P. The data segregation service DS checks the information supplied by the panel (Current User US, Logical Entity LE, Action AC and current value of the attribute AT) with the respective access right AC information stored on the MES DB at the engineering phase.

If the specific user belongs to a group having a role that allows performing the data access action (i.e. the role has assigned the Access Right AR associated to the Action AC and matches the Restriction Rules RR associated) the data segregation service DS responds to the Panel P that the permission for the data access is granted. Subsequently, the panel will show its content. Otherwise, its content will be not shown.

For the example introduced above, the following conclusions result from the action AC and the restriction rule RR: Users belonging to Group1 will have displayed the detailed information comprised in the Panel P only if the selected Production Orders runs on LINE1. Users belonging to Group2 will have displayed the detailed information contained in the panel P for each production Order regardless which production line is busy/scheduled on this production order. Users belonging to any other group will be not able to view the detailed information at all.

The major steps and system parts according to the present invention can be summarized as follows: The method and the system for restricting specific user roles from accessing predetermined portions of MES screens SC depending on the state of the MES screen page in a manufacturing execution system, comprising:
at the engineering phase:
   a) A number of logical entities LE are defined, such as a production order, a machine, a production line, personnel, materials, by an attribute AT. These logical entities LE are present within a production plant which is controlled and monitored by the MES;
   b) Each logical entity LE is associated with a number of actions AC being executable on and/or with respect to the respective logical entity LE;
   c) Each action AC can optionally be associated with a restriction rule RR that defines a number of rules for restricting the action AC relative the value/s of one or more attributes AT;
   d) The actions AC and the respective restriction rules RR (if any) are associated to a number of roles RO in terms of role specific access rights AR. This catalogue of actions AC with the respective restriction rules RR and the deducted access rights RR thereupon establishes a data segregation service DS;
   e) The role specific access rights AR are written into the configuration file CF for the MES screen SC stored at the MES database DB;
   f) The panel P in the MES screen SC comprises data that is subject to role specific access rights AR; with other words the panel P comprises all the data where the display of the data depends on the role of the specific user who would like to access the data;
      at the runtime phase:
   g) when the MES screen SC is requested for the first time on a GUI that is attached to the Manufacturing Execution System or when a specific user interacts with the MES screen SC, the panel P reads from the configuration file CF the logical entity(ies) LE and the action(s) AC related to the request of the specific user;
   h) the information on the state of the MES screen page is retrieved from a contextualization service CS that comprises the current values for the attribute AT of the respective logical entity LE wherein the current value of the attribute AT of the logical entity LE is written on the contextualization service CS by a logic programmed on the MES screen SC; the contextualization service therefore receives and maintains all the information which is afterwards necessary for the display within the panel P;
   i) the panel P invokes the data segregation service DS asking the right to display the content of the panel P on the MES screen SC;
   j) the data segregation service DS checks the information supplied by the panel P, such as the specific user US, the logical entity LE, the action AC and the current value of the attribute AT, against the roles RO and the role specific access rights AR stored to the MES database DB at the engineering phase. Only if the specific user US is assigned a role that is allowed to perform the action AC, the data segregation service responds to the panel P that the permission is granted and the content of the panel P is effectively shown to the specific user.

The main advantages of the present solution materializes in the fact that a set of generic predefined MES screens SC can be delivered with the software package of the manufacturing execution system. The access to portions of the MES Screens SC is regulated in accordance to the restriction rules RR and the access rights AR derived thereupon. The logic involved on this data management resides therefore in the logic of the MES screens CS and is managed by the MES screen SC without any need to modify the source code of the MES screens SC. This leads to reduced efforts for the customizing the MES screen SC which directly also reduces the costs. This approach is less error prone to the customization because any faults can be only made at the engineering phase when associating logical entities and the actions as well as the restriction rules. Since the source code is not modified for the customization the maintenance cost decreases, too.

## Claims

1. A method for restricting specific user roles from accessing predetermined portions of MES screens (SC) depending on the state of the MES screen page in a manufacturing execution system, hereinafter referred to as MES, comprising the steps of:
a) at engineering phase:
a1) defining a number of logical entities (LE), such as a production order, a machine, a production line, personnel, materials, by an attribute (AT), present within a production plant controlled and monitored by the MES;
a2) associating with each logical entity (LE) a number of actions (AC) being executable on and/or with respect to the respective logical entity (LE);
a3) associating to an action (AC) a restriction rule (RR) that defines a number of rules for restricting the action (AC) relative the value/s of one or more attributes (AT);
a4) associating the actions (AC) and the respective restriction rules (RR) to a number of roles (RO) in terms of role specific access rights (AR) thereby establishing a data segregation service (DS);
a5) writing the role specific access rights (AR) into a MES screen configuration file (CF) stored at a MES database (DB);
a6) defining a panel (P) in the MES screen (SC) that comprises data that is subject to role specific access rights (AR);
b) at a runtime phase:
b1) when the MES screen (SC) is requested for the first time or when a specific user (US) interacts with the MES screen (SC), reading by the panel (P) from the configuration file (CF) the logical entity (LE) and the action (AC) related to the request of the specific user (US);
b2) retrieving the information on the state of the MES screen page from a contextualization service (CS) that comprises the current values for the attribute (AT) of the respective logical entity (LE) wherein the current value of the attribute (AT) of the logical entity (LE) is written on the contextualization service (CS) by a logic programmed on the MES screen (SC);
b3) invoking by the panel (P) the data segregation service (DS) asking the right to load the content of the panel (P) to the MES screen (SC);
b4) checking by the data segregation service (DS) the information supplied by the panel (P), such as the specific user (US), the logical entity (LE), the action (AC) and the current value of the attribute (AT) against the roles (RO) and the role specific access rights (AR) stored to the MES database (DB) at the engineering phase, and only if the specific user (US) is assigned a role (RO) that is allowed to perform the action (AC), responding to the panel (P) that the permission is granted and showing the content of the panel (P).

2. A system for restricting specific user roles from accessing predetermined portions of MES screens depending on the state of the MES screen page in a MES, comprising:
a) at an engineering phase:
a1) a number of logical entities (LE), such as a production order, a machine, a production line, personnel, materials, present within a production plant controlled and monitored by the MES, said logical entities (LE) being defined by an attribute (AT);
a2) each logical entity (LE) being associated to a number of actions (AC) being executable on and/or with respect to the respective logical entity (LE);
a3) means for associating to an action (AC) a restriction rule (RR) that defines a number of rules for restricting the action (AC) relative the value/s of one or more attributes (AT);
a4) a data segregation service (DS) handling the actions (AC) and the respective restriction rules (RR) being associated to a number of roles (RO) in terms of role specific access rights (AR);
a5) a MES database (DB) for writing the role specific access rights (AR) into a MES screen configuration file (CF);
a6) a panel (P) in the MES screen (SC) comprising data that is subject to role specific access rights (AR);
b) at a runtime phase:
b1) when the MES screen (SC) is requested for the first time or when a specific user (US) interacts with the MES screen (SC), the panel (P) reads from the configuration file (CF) the logical entity (LE) and the action (AC) related to the request of the specific user (US);
b2) a contextualization service (CS) for retrieving the information on the state of the MES screen page, said contextualization service (CS) comprises the current values for the attribute (AT) of the respective logical entity (LE) wherein the current value of the attribute (AT) of the logical entity (LE) is written on the contextualization service (CS) by a logic programmed on the MES Screen (SC);
b3) the panel (P) invokes the data segregation service (DS) asking the right to display the content of the panel (P) on the MES screen (SC);
b4) the data segregation service (DS) checks the information supplied by the panel (P), such as the specific user (US), the logical entity (LE), the action (AC) and the current value of the attribute (AT), against the roles (RO) and the role specific access rights (AR) stored to the MES database (DB) at the engineering phase, and only if the specific user (US) is assigned a role (RO) that is allowed to perform the action (AC), the data segregation service (DS) responds to the panel (P) that the permission is granted and the panel (P) shows its content.
